# EUROPEAN PATENT SPECIFICATION

(11) **EP 3 382 244 B1**
(45) Date of publication and mention of the grant of the patent: **20.01.2021**
(21) Application number: 18162967.6
(22) Date of filing: 20.03.2018
(51) Int. Cl.: F16K 27/02, F16K 31/06, B21D 22/21

(54) **SOLENOID VALVE, AND METHOD FOR MANUFACTURING THE SOLENOID VALVE**
MAGNETVENTIL UND VERFAHREN ZUR HERSTELLUNG DES MAGNETVENTILS
ÉLECTROVANNE ET PROCÉDÉ DE FABRICATION DE L'ÉLECTROVANNE

(30) Priority: 27.03.2017 JP 2017061555
(43) Date of publication of application: 03.10.2018
(73) Proprietor: CKD Corporation, Komaki-shi, Aichi 485-8551 (JP)
(72) Inventor: KATOH, Atsushi, Komaki-shi, Aichi 485-8551 (JP); ITOH, Katsushi, Komaki-shi, Aichi 485-8551 (JP); IGUCHI, Seiji, Komaki-shi, Aichi 485-8551 (JP); YOSHINO, Kohei, Komaki-shi, Aichi 485-8551 (JP)
(74) Representative: Prüfer & Partner mbB Patentanwälte · Rechtsanwälte

(56) References cited:
- EP-A2- 1 284 384
- DE-A1- 2 427 201
- JP-A- H0 727 245
- JP-A- 2002 143 934
- US-A- 5 746 412

## Description

### BACKGROUND

### Technical field

This disclosure relates to a solenoid valve configured to attract a movable core upon energization of a hollow cylindrical solenoid part to thereby move a valve element, and a method for manufacturing the solenoid valve.

### Related Art

Conventionally, a widely used solenoid valve is configured such that a fixed core made of magnetic material is inserted into one end of a hollow portion of a hollow cylindrical solenoid part and a movable core is inserted into the other end of the hollow portion of the solenoid part.

For the purpose of reducing the number of components or parts to reduce cost, JP 2003-172468 A (Patent Document 1) discloses a solenoid valve configured such that a magnetic core is provided to form a magnetic circuit around a solenoid part, and a part of the magnetic core protrudes into the one end of the hollow portion of the solenoid part to form a hollow cylindrical fixed core provided with a bottom wall portion.

US 5 746 412 A discloses an electromagnetic valve device according to the preamble of claim 1.

JP 2002-143934 A discloses a die for drawing a drawn product. The document does not disclose at least the feature of claim 1 that the fixed core includes a peripheral wall portion formed such that a thickness of the peripheral wall portion near the bottom wall portion is as thick as 80% or more of a thickness of an outside plate portion of the magnetic core.

### SUMMARY

### Technical Problems

However, the solenoid valve and a manufacturing method thereof disclosed in Patent Document 1 have the following problems.

Specifically, when a flat steel plate which is a blank or work piece for forming a magnetic core is drawn to form a protruding portion, this protruding portion has a distal end portion having a thickness as thin as about 60% of the blank flat steel plate. In particular, when the protruding portion is made by deep drawing to have such a length as to reach about a middle portion of the solenoid part, the distal end portion of the protruding portion becomes thinner.

The protruding portion forms a magnetic circuit through which a magnetic flux generated by coil energization flows. Thus, when the thickness of the protruding portion is thin, resulting in a small cross-sectional area of the magnetic circuit, the magnetic flux allowed to pass through the magnetic circuit decreases. This deteriorates an attraction force of the solenoid part, resulting in problems with operation failure or slow response of the solenoid valve.

When a thick flat steel plate is used as a blank to form a protruding portion with a sufficient thickness, the solenoid part can generate large attraction force. However, such a solenoid valve including a magnetic core having the thick protruding portion is large in size and heavy in weight, which is a problem that runs counter to the needs for downsizing of a solenoid valve.

The present invention has been made to solve the above problems and has a purpose to provide a solenoid valve including a fixed core capable of reducing resistance of a magnetic circuit even when a magnetic core is made by a drawing process, and a manufacturing method of the solenoid valve.

### Means of Solving the Problems

The above mentioned problem is solved by the solenoid valve according to caim 1 and the method for manufacturing a solenoid valve according to claim 4.
(1) According to the present invention, even when the flat steel plate which is a blank for forming the magnetic core is subjected to a drawing process to partially protrude and consequently the thickness of a peripheral, or side, wall portion of the fixed core around the bottom wall portion is thin, the thickness of the peripheral wall portion near the bottom wall portion can be as thick as 80% or more of the thickness of an outer plate portion of the magnetic core. Thus, a decreasing amount of a magnetic flux flowing through the magnetic circuit can be reduced and hence the attraction force of the solenoid part can be prevented from deteriorating. Consequently, the response property of the solenoid valve can be enhanced. Further, since the flat steel plate used as a blank for forming the magnetic core does not need to be thick, the needs for downsizing of a solenoid valve can be satisfied.
(2) In the solenoid valve described in (1), preferably, the fixed core has a protruding length to protrude into the hollow portion by a distance equal to or longer than one third of a length of the hollow portion of the solenoid part in an axial direction. When the fixed core is made by deep drawing so that the protruding length is equal to or more than one third of the axial length of the hollow portion of the solenoid part, the thickness of the peripheral wall portion of the fixed core near the bottom wall portion is apt to be thin, which is problematic. However, according to the above configuration, the thickness of the peripheral wall portion of the fixed core near the bottom wall portion is as thick as 80% or more of the thickness of the outer plate portion of the magnetic core. This can reduce a decreasing amount of a magnetic flux flowing through the magnetic circuit, thus reducing decrease of attraction force of the solenoid part. Therefore, the response property of the solenoid valve can be maintained. Since the thickness of the flat steel plate used as a blank for forming the magnetic core does not need to be thick, the needs for downsizing the solenoid valve can be satisfied.
(3) In the solenoid valve described in (1) or (2), preferably, the fixed core is formed of a flat steel plate subjected to a drawing process more than once, and in the drawing process, a portion of the flat steel plate other than a drawn portion is unclamped down to allow material of the portion other than the drawn portion to flow to the drawn portion. According to the above configuration, the thickness of the peripheral wall portion of the fixed core near the bottom wall portion can be as thick as 80% or more of the thickness of the outer plate portion of the magnetic core. Furthermore, end faces of the flat steel plate may be subjected to a force for causing the material to flow to the drawn portion which forms the peripheral wall portion. In this case, the thickness of the peripheral wall portion of the fixed core near the bottom wall portion can be easily made to be 80% or more of the thickness of the outer plate portion of the magnetic core.
   Herein, in the drawing process, the portion of the flat steel plate other than the drawn portion is not clamped down to allow the material of the unclamped portion to flow inwards to the drawn portion. Furthermore, the end faces of the flat steel plate may be subjected to a force for forcing the material to flow to the drawn portion.
(4) According to the method according to the present invention, the thickness of a peripheral wall portion of the fixed core near the bottom wall portion can be made to be as thick as 80% or more of the thickness of an outer plate portion of the magnetic core. This can reduce a decreasing amount of a magnetic flux flowing through the magnetic circuit, suppressing decrease of attraction force of the solenoid part. Thus, the response property of the solenoid valve can be maintained. Further, since the thickness of the flat steel plate used as a blank for forming the magnetic core does not need to be thick, the needs for downsizing the solenoid valve can be satisfied.
(5) Further, a decreasing amount of a magnetic flux flowing through the magnetic circuit can be reduced and hence the attraction force of the solenoid part can be prevented from deteriorating. Consequently, the response property of the solenoid valve can be maintained. Further, since the thickness of the flat steel plate used as a blank for forming the magnetic core does not need to be thick, the needs for downsizing of a solenoid valve can be met.

### BRIEF DESCRIPTION OF THE DRAWINGS

FIG. 1 is a cross sectional view taken along a line A-A in FIG. 3;
FIG. 2 is a cross sectional view taken along a line B-B in FIG. 3;
FIG. 3 is a perspective view of a solenoid valve in one embodiment of the invention;
FIG. 4 is an exploded perspective view of a part of a coil-core assembly;
FIG. 5 is an exploded perspective view of a body-pipe assembly;
FIG. 6 is a perspective view of a coil assembly;
FIG. 7 is a perspective view of a finished body-pipe assembly, in which screws are not illustrated;
FIG. 8 is an exploded perspective view showing a coupling structure and a method for assembling a coil assembly and a body-pipe assembly;
FIG. 9 is a conceptual diagram showing a processing method for drawing a flat steel plate;
FIG. 10 is a cross-sectional view showing a conventional processing method for drawing;
FIG. 11 is a cross-sectional view showing a fourth step of a drawing process in the present embodiment;
FIG. 12 is a cross-sectional view showing a fifth step of the drawing process in the present embodiment;
FIG. 13 is a cross-sectional view showing a state where a clip is set in place;
FIG. 14 is a diagram showing a positional relationship between the clip, a bent portion, and an inwardly-bent flange; and
FIG. 15 is an explanatory view to show a magnetic circuit in a solenoid valve.

### DETAILED DESCRIPTION OF THE EXEMPLARY EMBODIMENTS

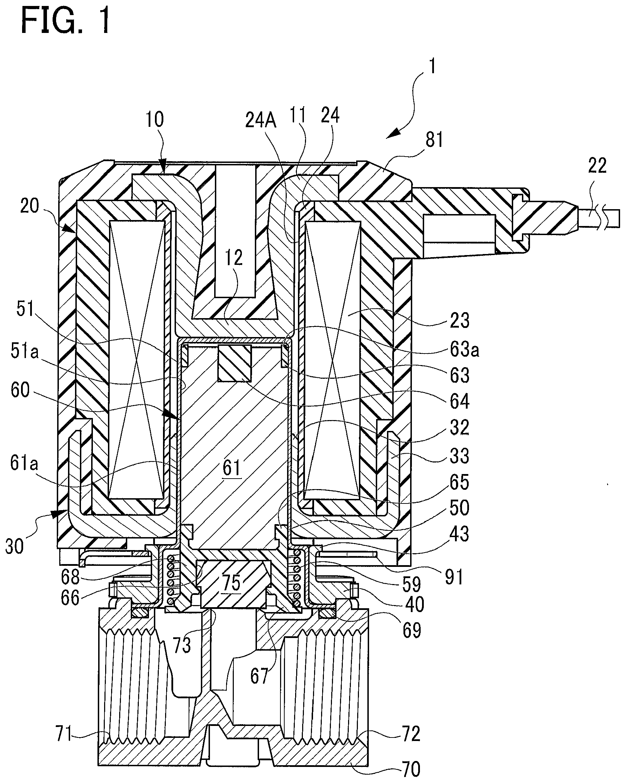

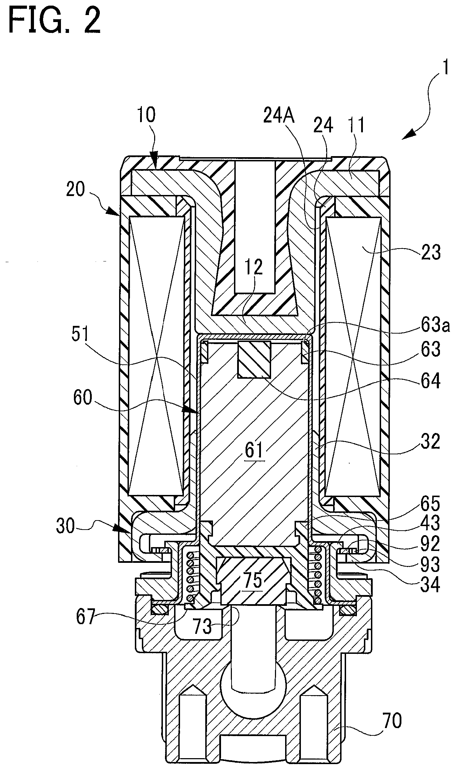

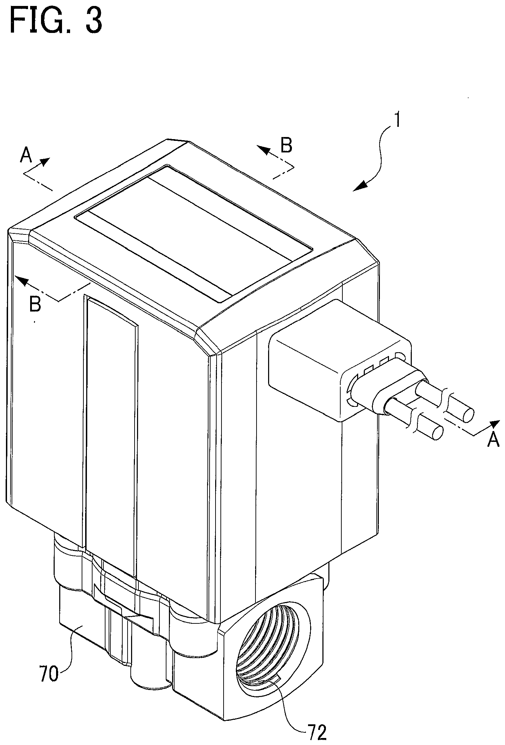

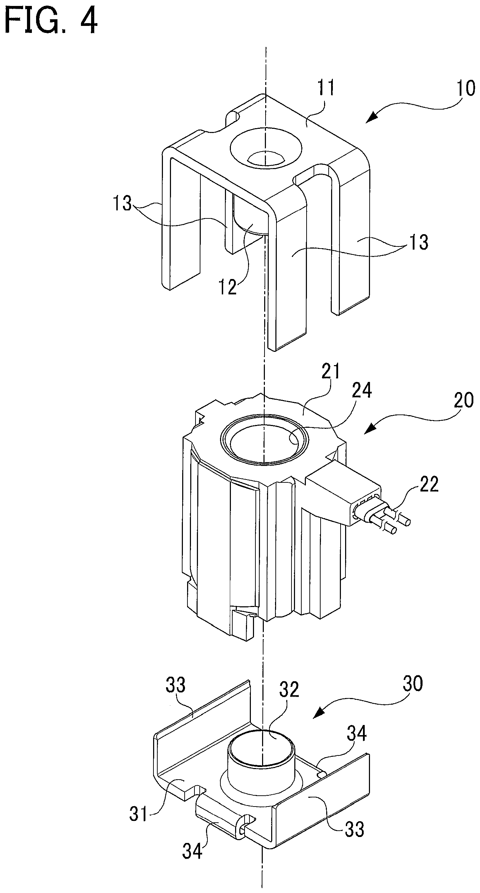

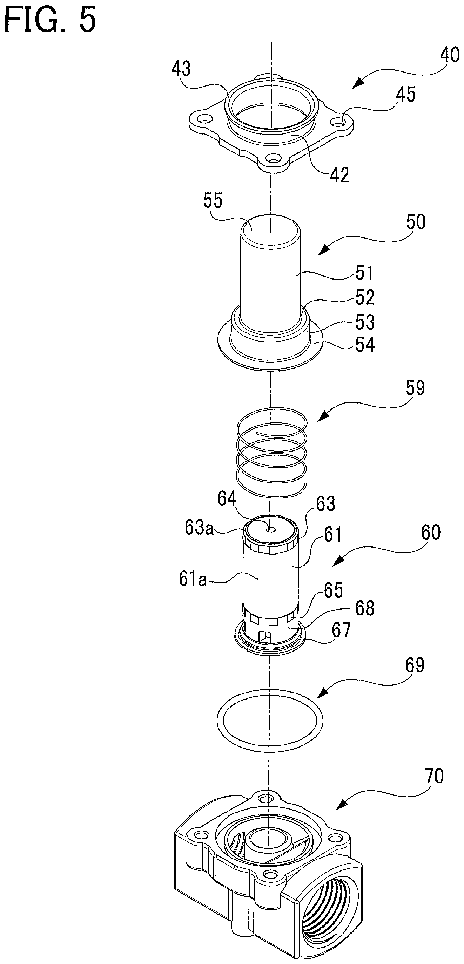

A detailed description of one embodiment of a solenoid valve of the present invention will now be given referring to the accompanying drawings. FIG. 3 is a perspective view of a solenoid valve 1 in the present embodiment. FIG. 1 is a cross-sectional view taken along a line A-A in FIG. 3, and FIG. 2 is a cross-sectional view taken along a line B-B in FIG. 3. FIG. 4 is an exploded perspective view of a part of a coil-core assembly. FIG 5 is an exploded perspective view of a body-pipe assembly.

As shown in FIGs. 1, 2, and 4, the coil-core assembly includes an upper core 10 having a nearly inverted U shape, a coil molded part 20 (one example of a solenoid part) containing a winding coil 23 embedded by molding, and a lower core 30. The upper core 10 and the lower core 30 (one example of a magnetic core) are each made of ferromagnetic material to form a part of a magnetic circuit.

The upper core 10 includes an upper plate portion 11 having a nearly rectangular shape and being formed, at its center, with a protruding portion 12 (one example of a fixed core) having a bottom-closed cylindrical shape protruding downward in FIG. 4. The upper core 10 further includes four side plate portions 13 continuously extending downward two from each of two opposite side edges of the upper plate portion 11. The protruding portion 12 has a hollow cylindrical shape provided with a bottom wall portion 12a at a distal end (a lower end in the figures) and an opening, or open end, at a proximal end (an upper end in the figures).

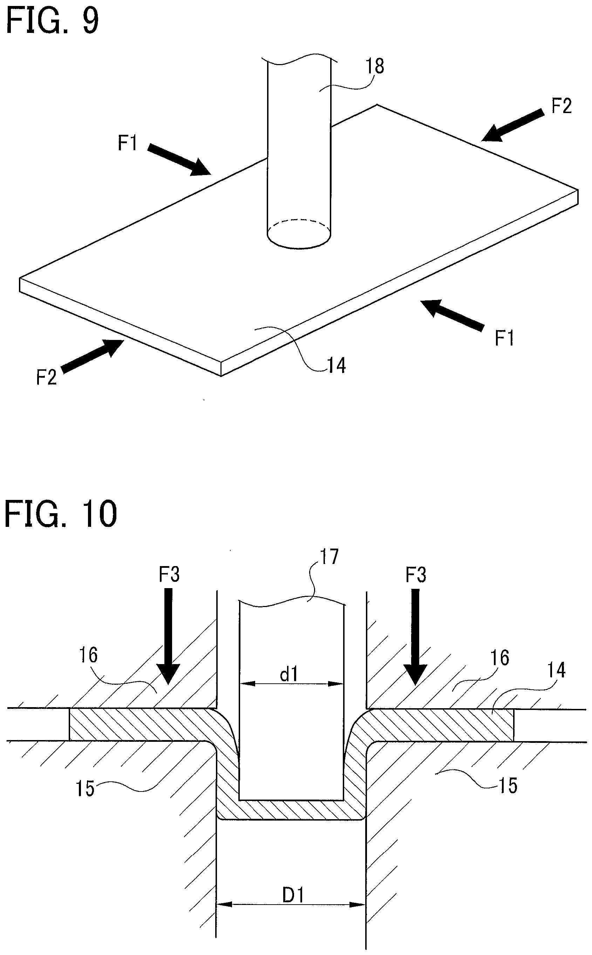

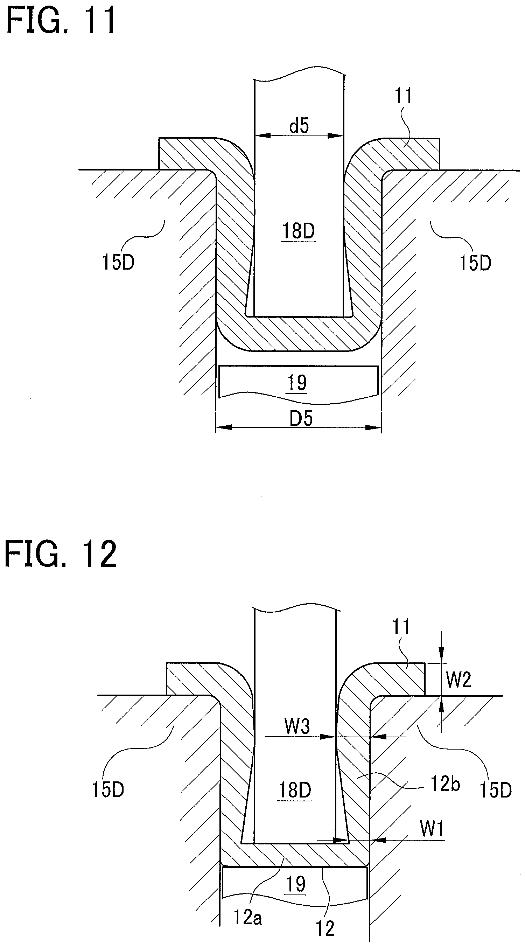

Herein, a method for producing the protruding portion 12 will be described below. FIGs. 9, 11, and 12 are diagrams to show a processing method for subjecting a flat steel plate 14 made of ferromagnetic material to a drawing process. Specifically, FIGs. 11 and 12 are cross-sectional diagrams to show a fourth step and a fifth step. FIG. 10 is a diagram to show a conventional drawing process.

As shown in FIG. 10, the conventional drawing process is performed by fixedly clamping a portion of a flat steel plate (a blank) except a portion to be drawn between a pair of an upper die 16 and a lower die 15 applied with a high force F3 and then moving a punch 17 downward to draw or stretch the blank. According to this conventional process, the thickness of the clamped portion of the flat steel plate other than the drawn portion is not reduced, and only the drawn portion is stretched thinner to form a hollow portion having a bottom wall portion.

In contrast, the drawing process in the present embodiment will be described below. As shown in FIGs. 9, 11, and 12, the present drawing process uses only a lower die without using an upper die. In the present embodiment, the drawing process for forming the protruding portion 12 is performed sequentially in five steps; a first step, a second step, and a third step, which are not illustrated, a fourth step shown in FIG. 11 and a fifth step shown in FIG. 12.

In a first step, not shown, there are used a punch having the diameter larger than the diameter d1 of the punch 17 in FIG. 10 and a lower die with a processing hole having the inner diameter larger than the diameter D1 of the lower die 15 in FIG. 10. An end face of the processing hole of the lower die is formed with a tapered surface. In the first step, the flat steel plate 14 is thus formed into a truncated cone shape.

In a second step, not shown, there are used a punch having the diameter smaller than the diameter of the punch used in the first step and a lower die with a processing hole having the inner diameter smaller than the inner diameter of the lower die used in the first step. An end face of the processing hole of the lower die in this second step is formed with a more steeply tapered surface than in the first step to form the truncated-conical flat steel plate 14 into a shape close to a cylindrical shape.

In a third step, not shown, there are used a punch having the diameter smaller than the diameter of the punch used in the second step and a lower die with a processing hole having the inner diameter smaller than the inner diameter of the lower die used in the second step. An end face of the processing hole of the lower die in this third step is formed with a still more steeply tapered surface than in the second step to further form the truncated-conical flat steel plate 14 into a shape closer to a cylindrical shape,

FIG. 11 is a diagram showing a fourth step of the drawing process. A punch 18D used in the fourth step has the diameter d5 larger than the diameter of the punch used in the third step and a lower die 15D used in the fourth step has a processing hole having the inner diameter D5 larger than the inner diameter of the lower die used in the third step. The processing hole in the fourth step is cylindrical.

In FIG. 9, forces F1 and F2 are externally exerted on the flat steel plate 14, or its end faces, from lateral directions. However, if the thickness W1 of a peripheral, or side, wall portion 12b of the protruding portion 12 near the bottom wall portion 12a is as thick as necessary, the forces F1 and F2 do not need to be externally applied.

FIG. 12 is a diagram showing a fifth step of the drawing process. As shown in FIG. 12, a lower slide die 19 which slides inside the processing hole of the lower die 15D moves upward in a state shown in FIG. 11, pushing up the flat steel plate and pressing it against the punch 18D to arrange the shape of the bottom (12a) of the flat steel plate. The protruding length of the protruding portion 12 is appropriately determined so that its distal end protrudes into the hollow portion of the coil molded part 20 (a hollow hole 24A of the coil bobbin 24) by a distance equal to or more than one third of the axial length of the hollow portion.

Through the first to fifth steps, the protruding portion 12 is finished. In the case of drawing process, the peripheral wall portion 12b of the protruding portion 12 near the bottom wall portion 12a is most stretched and thinned to a thickness W1. In the present embodiment, therefore, a portion of the flat steel plate other than a portion to be drawn (a drawn portion) which will form the peripheral wall portion 12b is unclamped between upper and lower dies, so that metal material of the portion other than the drawn portion is allowed to move toward the drawn portion undergoing stretching downward. Accordingly, in the protruding portion 12, the thickness W3 of the peripheral wall portion 12b near the open end (a proximal end side) far from the bottom wall portion 12a (a distal end side) is thicker than the thickness W2 of the flat steel plate used as the blank. This ensures that the thickness W1 of the peripheral wall portion 12b near the bottom wall portion 12a is as thick as 80% or more of the thickness W2 of the blank, flat steel plate.

The diameter d5 of the punch 18D is set smaller than the diameter d1 of the punch 17 in FIG. 10 in order to prevent contact with the inner surface of the peripheral wall portion 12b of the protruding portion 12 near the open end far from the bottom wall portion 12a. This is because, in the drawing process, the forces F1 and F2 are applied as shown in FIG. 9 to cause metal material to flow to the protruding portion 12 in order to prevent thinning of the peripheral wall portion 12b and thus the inner diameter of the protruding portion 12 is reduced.

As shown in FIG. 4, the coil molded part 20 is made in such a manner that the coil 23 is wound on the outer periphery of the plastic hollow coil bobbin 24, and then this coil bobbin 24 with the coil 23 wound thereon is coated with resin by insert molding to form a molded portion 21.

The coil molded part 20 is provided with external connecting terminals 22 which serve to electrically connect the coil 23 to an external power supply. The protruding portion 12 of the upper core 10 is inserted from above into the hollow hole 24A of the coil bobbin 24 which constitutes the hollow portion of the coil molded part 20.

The lower core 30 includes a bottom plate portion 31 having a nearly rectangular shape, at the center of which, there is formed a protruding portion 32 cylindrically protruding upward in FIG. 4. The lower core 30 further includes side plate portions 33 extending upward one from each of two opposite side edges of the bottom plate portion 31, i.e., toward the side plate portions 13 of the upper core 10, and a pair of inwardly-bent flanges 34 formed one in each of two opposite side edges of the bottom plate portion 31 other than the side edges formed with the side plate portions 33. Each of the flanges 34 has a laterally-facing U-shaped cross section and is open inward as shown in FIG. 2.

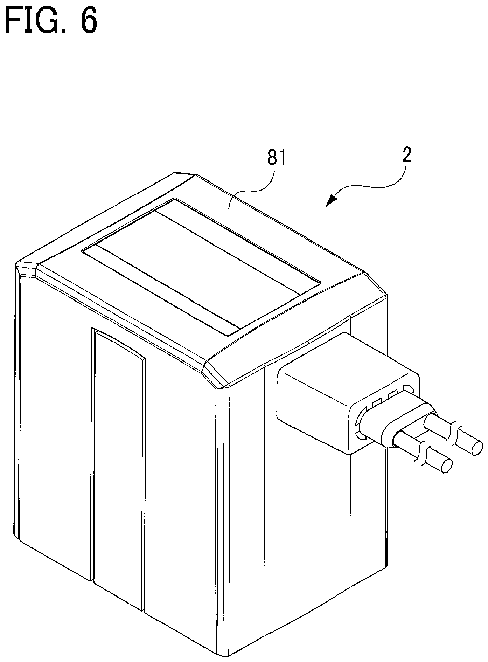

The protruding portion 32 of the lower core 30 is inserted into the hollow hole 24A of the coil bobbin 24 from below. While the coil molded part 20 is held between the upper core 10 and the lower core 30, the leading ends of the side plate portions 13 are welded to the corresponding side plate portions 33. Thus, a coil-core assembly is completed. This coil-core assembly is then coated with resin by insert molding to form a molded portion 81. A coil assembly 2 shown in FIG. 6 is finished.

A body-pipe assembly 3 is successively described below. As shown in FIGs. 1, 2, and 5, a stuffing 40 serving as a fastening tool is secured to a body (a valve body) 70 with four screws not shown while a flare pipe 50 and an O ring 69 are held therebetween.

The stuffing 40 has a nearly square plate-like shape formed with screw holes 45 in four corners. At the center of the stuffing 40, a circumferential side wall 42 protruding upward. This side wall 42 is provided, at its leading end (an upper end in FIG. 5), with a bent portion 43 bent radially outwardly over the entire circumference of the side wall 42.

The flare pipe 50 includes a hollow cylindrical portion 51 closed by a top face (a top wall) 55 and a large-diameter portion 53 having a larger diameter than the cylindrical portion 51 by a diameter-widening portion 52. This diameter-widening portion 52 perpendicularly extends radially outward from the cylindrical portion 51 to the large-diameter portion 53 so that the cylindrical portion 51 and the large-diameter portion 53 are parallel with each other.

The large-diameter portion 53 is provided, at its lower end, with a flange 54 extending radially outward. The flare pipe 50 is made of magnetic material, which will form a part of a magnetic circuit. Inside the large-diameter portion 53, a cylindrical compression spring 59 is accommodated.

A plunger 60 serving as a movable core includes a plunger body 61 made of ferromagnetic material. The plunger body 61 is formed, at the center of its upper face, with a hole in which a silencing rubber 64 is mounted to protrude from the upper face. The silencing rubber 64 serves to reduce impact noise generated when the plunger 60 is attracted toward the protruding portion 12 and strikes or collides against an inner surface of the top face 55 of the flare pipe 50.

The plunger body 61 is formed with a plastic upper wear ring 63 circumferentially placed on an upper part of an outer peripheral surface. The upper wear ring 63 protrudes radially outward at regular intervals. The plunger body 61 is further formed, on its upper face, with a plastic ring 63a having a plurality of projections protruding outward in an axial direction (upward in the figures). The plastic ring 63a is provided integral with the upper wear ring 63 by integral molding. Thus, the ring 63a can mitigate the impact caused when the plunger 60 is attracted as above. This can prevent breakage of the flare pipe 50 and also enhance the returning property of the plunger body 61.

As shown in FIG. 1, the plunger body 61 is provided, at its lower end, with a valve element holder 68 made of resin by integral molding. On an outer periphery of an upper part of the valve element holder 68, a lower wear ring 65 protruding radially outward is arranged in a position above the lower end of the cylindrical portion 51 of the flare pipe 50 facing the holder 68.

The upper wear ring 63 and the lower wear ring 65 each protruding radially outward as described above are in contact with an inner peripheral surface 51a of the cylindrical portion 51. In the present embodiment, a clearance of about 0.5 mm is thus formed, even though it is not explicitly illustrated in the figures, between an outer peripheral surface 61a of the plunger body 61 and the inner peripheral surface 51a of the cylindrical portion 51.

Accordingly, the outer peripheral surface 61a of the plunger body 61 is not in contact with the inner peripheral surface 51a of the cylindrical portion 51. Thus, the plunger body 61 and the cylindrical portion 51 do not slide or rub against each other during operation. This can prevent deterioration of sliding surfaces due to repeated operations and generation of abrasion powder which may increase sliding resistance, leading to operation failure.

Furthermore, the above clearance acts as magnetic resistance to a magnetic flux laterally flowing from the outer peripheral surface 61a of the plunger boy 61 to the inner peripheral surface 51a of the cylindrical portion 51. Accordingly, the attraction force generated between the inner peripheral surface 51a of the cylindrical portion 51 and the outer peripheral surface 61a of the plunger body 61 can be reduced.

The valve element holder 68 is provided with a flange 67 protruding radially outward from a lower end of the outer periphery of the holder 68. A cavity 66 is formed in the holder 68, in which a rubber valve element 75 is mounted.

The body 70 is provided with a first passage 71 and a second passage 72. These first passage 71 and second passage 72 are communicated with each other through a valve hole in which a valve seat 73 is provided. When the valve element 75 is moved into contact with the valve seat 73, the first passage 71 and the second passage 72 are blocked from communicating with each other. On the other hand, when the valve element 75 is separated from the valve seat 73, the first passage 71 and the second passage 72 are allowed to communicate with each other.

The plunger 60 is slidably held within the flare pipe 50 through the upper wear ring 63 and the lower wear ring 65. The upper end of the compression spring 59 is abutted on the inner surface of the diameter-widening portion 52 of the flare pipe 50 and the lower end of the compression spring 59 is abutted on the flange 67 of the plunger 60. The compression spring 59 urges the plunger 60 in a direction to move the valve element 75 into contact with or toward the valve seat 73.

Herein, the diameter-widening portion 52 is perpendicular to each of the cylindrical portion 51 and the large-diameter portion 53. Thus, the compression spring 59 is stably abutted on the inner surface of the diameter-widening portion 52. This can stabilize the urging force of the compression spring 59 and achieve a stable motion of the plunger 60. Accordingly, variation in response speed of the solenoid valve 1 can be reduced and hence constant response timing can be realized. Specifically, when the plunger 60 is to be attracted toward the protruding portion 12, the plunger 60 is moved by the magnetic force generated by energization of the coil 23 (the coil molded part 20), so that the timing of driving the plunger 60 is stable. In contrast, the force of the compression spring 59 is weaker than the attraction force of the coil molded part 20 and the plunger 60 is attracted toward the protruding portion 12 by residual magnetism, thereby possibly causing a delay in the driving timing of moving the plunger 60 downward. To prevent such a delay, the urging force of the compression spring 59 highly needs to be stabilized.

Furthermore, the compression spring 59 may enter the clearance between the plunger 60 and the cylindrical portion 51, leading to operation failure. To prevent such a defect, it is also necessary to stabilize the position of the compression spring 59.

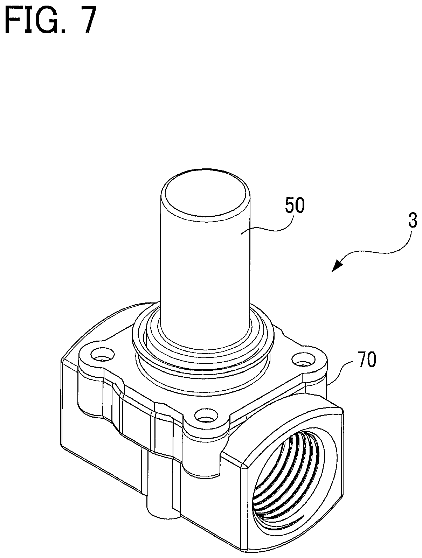

The stuffing 40 is secured to the body 70 with four screws not shown while the flare pipe 50 and the O ring 69 are held between the stuffing 40 and the body 70. Thus, the body-pipe assembly 3 shown in FIG. 7 (the screws are not shown) is finished.

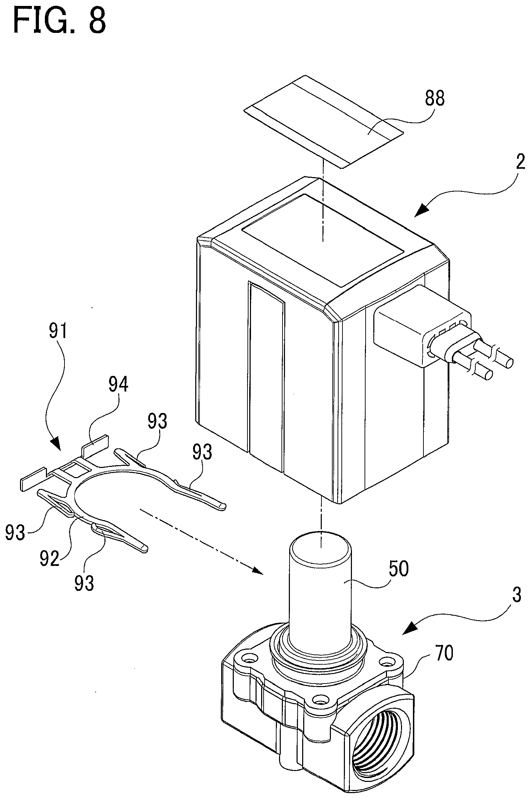

Next, a structure of coupling the coil assembly 2 and the body-pipe assembly 3 and a method for assembling them will be described referring to FIG. 8.

The flare pipe 50 of the body-pipe assembly 3 is inserted into the hollow hole 24A of the coil assembly 2 from below. A clip 91 is then placed in position to couple the coil assembly 2 and the body-pipe assembly 3. In the present embodiment, the clip 91 is made by press working of a resilient stainless-steel sheet having a thickness of about 1 mm.

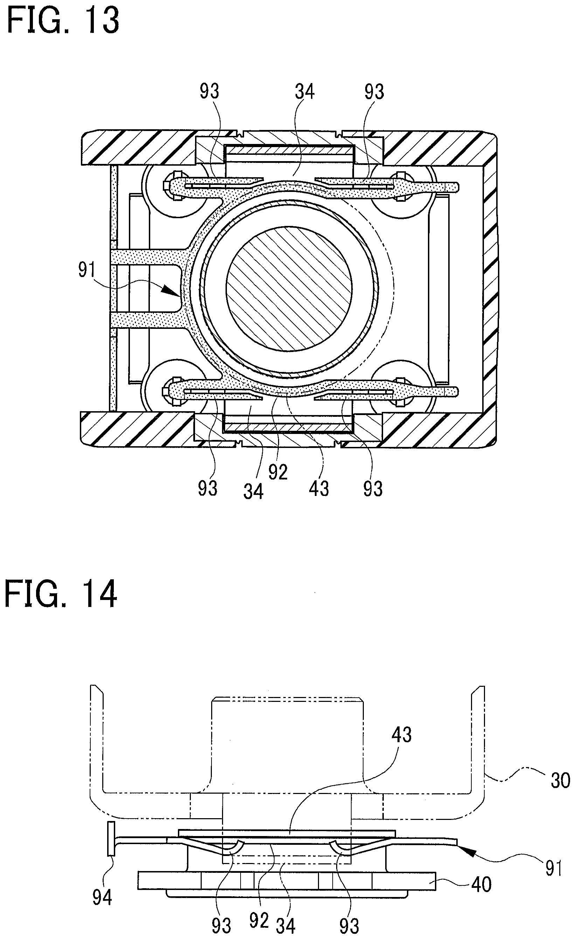

As shown in FIG, 8, the clip 91 includes a nearly U-shaped clip body 92 and a pair of lugs 94 which can be pinched by an operator. The clip body 92 is provided with four leaf springs 93 extending outward. Each of the leaf springs 93 is bent into an inverted triangular shape when seen from side (FIG. 14) and thus has a spring force acting in an up-down direction.

As shown in FIG. 2, the clip body 92 is inserted in the space between each inwardly-bent flange 34 of the lower core 30 of the coil assembly 2 and a bent portion 43 of the stuffing 40 of the body-pipe assembly 3.

FIG. 13 is a cross-sectional view showing the clip 91 set in position. FIG. 14 shows a positional relationship between the clip 91, the bent portion 43, and the inwardly-bent flanges 34. As shown in FIGs. 13 and 14, a part of the upper surface of the clip body 92 presses against the lower surface of the bent portion 43 of the stuffing 40. Further, the apex portions of the four triangular bent leaf springs 93 are abutted on the upper surfaces of the inwardly-bent flanges 34 of the lower core 30.

By the spring force of the four leaf springs 93, the flanges 34 of the lower core 30 of the coil assembly 2 and the bent portion 43 of the stuffing 40 of the body-pipe assembly 3 are urged in a direction to separate from each other. With this urging force of the leaf springs 93, the coil assembly 2 and the body-pipe assembly 3 are coupled to each other.

In the present embodiment, the leaf springs 93 are designed to generate a spring force of 15N to 25N per each leaf spring and 60N to 100N by a total of four leaf springs.

Conventionally, a coil assembly and a body-pipe assembly are coupled to each other for example by inserting a fixed core welded to an upper end of a hollow portion of a guide pipe of the body-pipe assembly through a hollow hole of a drive unit and fixing the fixed core at the upper end with a stopper ring. At that time, a wave washer is inserted between the coil assembly and the body-pipe assembly to urge the coil assembly upward.

The conventional method has problems that the number of components is large and a coupling portion is provided in the upper part of a solenoid part. This method is therefore inapplicable to a configuration that a fixed core does not extend through a solenoid part.

In the present embodiment, in contrast, the coil assembly 2 and the body-pipe assembly 3 can be coupled to each other by use of only the clip 91 having a spring force in combination with the inwardly-bent flanges 34 of the lower core 30 and the coil assembly 2 and the bent portion 43 of the stuffing 40 of the body-pipe assembly 3. Thus, the number of components can be reduced.

As shown in FIG. 8, finally, a stick-on label 88 is stuck on the coil assembly 2. The solenoid valve 1 is thus completed.

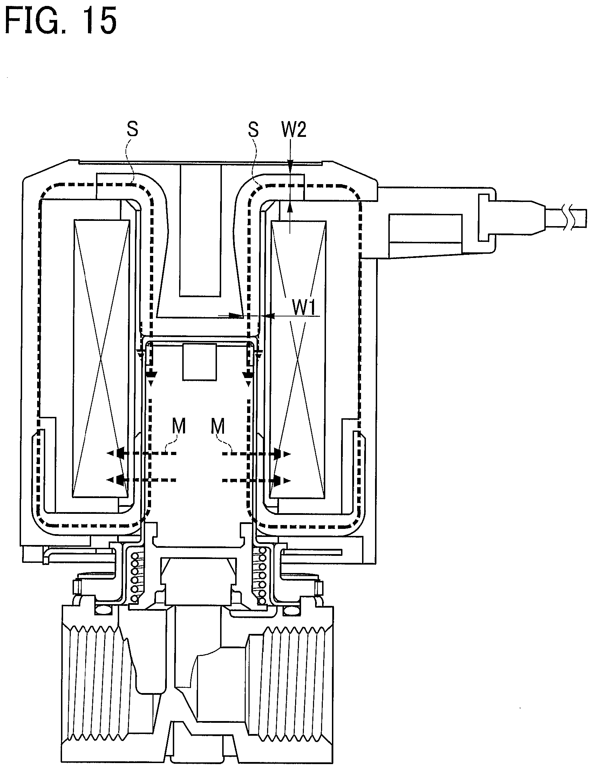

Next, the magnetic circuit of the solenoid valve 1 will be described below. FIG. 15 shows the magnetic circuit in the solenoid valve 1 and corresponds to FIG. 1, from which hatching lines are omitted.

As shown in FIG. 15, in the magnetic circuit, a magnetic flux S is limited by the thickness W1 of the peripheral wall portion, which is smallest in cross-sectional area as shown in FIG. 12, of the protruding portion near the bottom wall portion. In the present embodiment, however, the thickness W1 of the peripheral wall portion near the bottom wall portion is as thick as 80% or more of the thickness W2 of the flat steel plate used as a blank. Accordingly, a sufficient magnetic flux can be generated and thus the attraction force of the solenoid part is not decreased. The solenoid valve can maintain the response for opening at the high level.

In the present embodiment, the flare pipe 50 is made of magnetic material for the following reason. When the guide pipe for guiding the plunger is made of magnetic metal, usually, the outer peripheral surface of the plunger is attracted to the guide pipe and hence a large sliding resistance is generated therebetween. To avoid such a resistance, therefore, the guide pipe is made of non-magnetic material.

However, when the guide pipe is made of non-magnetic material, non-magnetic metal exists at some point of a main magnetic circuit of a magnetic flux flowing from the fixed core to the plunger. This causes a problem with an increased resistance in the main magnetic circuit, thus decreasing a magnetic flux allowed to flow.

In the present embodiment, to avoid the aforementioned problems, the flare pipe 50 is made of magnetic metal. Accordingly, when a magnetic flux flows through the flare pipe 50 made of magnetic metal, increasing a transverse attraction force applied to the plunger 60 enclosed in the cylindrical portion 51 of the flare pipe 50, the plunger body 61 slides against the cylindrical portion 51. Repetition of this sliding motion may deterioration of their sliding surfaces and generation of abrasion powder leading to an increase in sliding resistance, resulting in operation failure. To prevent those defects, in the present embodiment, the upper wear ring 63 and the lower wear ring 65 are arranged in contact with the inner peripheral surface 51a of the cylindrical portion 51 to form a clearance of about 0.5 mm between the outer peripheral surface 61a of the plunger body 61 and the inner peripheral surface 51a of the cylindrical portion 51.

This clearance serves as a magnetic resistance to the magnetic flux M laterally flowing from the outer peripheral surface 61a of the plunger body 61 to the inner peripheral surface 51a of the cylindrical portion 51. This can reduce the attraction force to be generated between the inner peripheral surface 51a of the cylindrical portion 51 and the outer peripheral surface 61a of the plunger body 61.

As described in detail above, according to the solenoid valve 1 in the present embodiment, the solenoid valve 1 includes the hollow cylindrical coil molded part 20, the plunger 60, and the valve element 75, in which the plunger 60 is attracted upon energization of the coil molded part 20 to move the valve element 75. The solenoid valve 1 further includes the magnetic core (the upper core 10 and the lower core 30) surrounding the coil molded part 20 to form a magnetic circuit. A part of the upper core 10 protrudes into the hollow portion (24A) of the coil molded part 20 to form the hollow cylindrical protruding portion 12 provided with the bottom wall portion 12a at a distal end. The protruding portion 12 includes the peripheral wall portion 12b formed such that the thickness W1 of the peripheral wall portion 12b near the bottom wall portion 12a is as thick as 80% or more of the thickness W2 of the upper plate portion (the outside plate portion) 11 of the upper core 10, located outside the coil molded part 20 in the axial direction thereof. Accordingly, even when the flat steel plate 14 which is a blank for forming the upper core 10 is subjected to a drawing process to partially protrude and consequently the thickness W1 of the peripheral wall portion 12b of the protruding portion 12 near the bottom wall portion 12a is thin, the thickness W1 of the peripheral wall portion 12b of the protruding portion 12 near the bottom wall portion 12a can be as thick as 80% or more of the thickness W2 of the upper plate portion 11. Thus, a decreasing amount of a magnetic flux S flowing through the magnetic circuit can be reduced and hence the attraction force of the coil molded part 20 can be prevented from deteriorating. Consequently, the response property of the solenoid valve 1 can be enhanced. Further, since the flat steel plate 14 used as a blank for forming the upper plate portion 11 does not need to be thick, the needs for downsizing of the solenoid valve 1 can be satisfied.

In the aforementioned solenoid valve 1, the protruding portion 12 has a protruding length to protrude into the hollow portion 24A by a distance equal to or longer than one third of a length of the hollow portion 24A of the coil molded part 20 in the axial direction. Accordingly, when the protruding portion 12 is made by deep drawing so that its protruding length is equal to or more than one third of the axial length of the hollow portion 24A of the coil molded part 20, the thickness of the peripheral wall portion 12b of the protruding portion 12 near the bottom wall portion 12a of the protruding portion 12 is apt to be thin, which is problematic. In the present embodiment, however, the thickness W1 of the peripheral wall portion 12b of the protruding portion 12 near the bottom wall portion 12a is as thick as 80% or more of the thickness W2 of the upper plate portion 11. This can reduce a decreasing amount of the magnetic flux S flowing through the magnetic circuit, and hence enhance the response property of the solenoid valve 1. Since the thickness of the flat steel plate 14 used as a blank for forming the upper core 10 does not need to be thick, the needs for downsizing the solenoid valve 1 can be met.

In the aforementioned solenoid valve 1, the protruding portion 12 is formed of the flat steel plate 14 subjected to a drawing process more than once. In the drawing process, a portion of the flat steel plate 14 other than a portion to be drawn (a drawn portion) is not clamped down to allow the material of the unclamped portion to flow to the drawn portion. Accordingly, the thickness W1 of the peripheral wall portion 12b of the protruding portion 12 near the bottom wall portion 12a can be as thick as 80% or more of the thickness W2 of the outer plate portion 11.

Herein, the end faces of the flat steel plate 14 may be applied with a force for causing the material to flow to the drawn portion. In this case, the thickness W1 of the peripheral wall portion 12b of the protruding portion 12 near the bottom wall portion 12a can be easily made to be 80% or more of the thickness W2 of the outer plate portion 11.

The method for manufacturing the solenoid valve in the present embodiment can provide the following operations and effects. Specifically, in the method for manufacturing the solenoid valve 1 including the hollow coil molded part 20, the plunger 60, and the valve element 75, in which the plunger 60 is attracted upon energization of the coil molded part 20 to move the valve element 75, the solenoid valve 1 further includes the magnetic core (the upper core 10 and the lower core 30) surrounding the coil molded part 20 to form a magnetic circuit. The method includes subjecting the flat steel plate 14 to a drawing process more than once so that a part of the upper core 10 protrudes into the hollow portion 24A of the coil molded part 20 to form the hollow cylindrical protruding portion 12 provided with the bottom wall portion 12a at its distal end. In the drawing process, a portion of the flat steel plate 14 other than a portion to be drawn (a drawn portion) is unclamped down to allow material of the unclamped portion to flow to the drawn portion. Accordingly, the thickness W1 of the peripheral wall portion 12b of the protruding portion 12 near the bottom wall portion 12a can be made to be as thick as 80% or more of the thickness W2 of the upper plate portion 11 of the upper core 10. This can reduce a decreasing amount of a magnetic flux S generated in the magnetic circuit and enhance the response property. Further, since the thickness of the flat steel plate 14 used as a blank for forming the upper core 10 does not need to be thick, the needs for downsizing the solenoid valve 1 can be satisfied.

In the aforementioned manufacturing method of the solenoid valve 1, the protruding portion 12 has a protruding length to protrude into the hollow portion by a distance equal to or longer than one third of the length of the hollow portion of the coil molded part 20 in the axial direction. The protruding portion 12 includes the peripheral wall portion 12b having the thickness W1 near the bottom wall portion 12a, the thickness W1 being 80% or more of the thickness W2 of the upper plate portion 11. Accordingly, a decreasing amount of a magnetic flux S generated in the magnetic circuit can be reduced and hence the response property can be enhanced. Further, since the thickness of the flat steel plate used as a blank for forming the upper core 10 does not need to be thick, the needs for downsizing the solenoid valve 1 can be satisfied.

In the aforementioned manufacturing method of the solenoid valve 1, the protruding portion 12 has a protruding length to protrude into the hollow portion of the coil molded part 20 by a distance equal to or longer than one third of a length of the hollow portion of the coil molded part 20 in the axial direction. When the protruding portion 12 is made by deep drawing so that the protruding length is equal to or more than one third of the axial length of the hollow portion of the coil molded part 20, the thickness W1 of the peripheral wall portion 12b of the protruding portion 12 near the bottom wall portion 12a is apt to be thin, which is problematic. In contrast, according to the aforementioned embodiment, the thickness W1 of the peripheral wall portion 12b of the protruding portion 12 near the bottom wall portion 12a is made as thick as 80% or more of the thickness W2 of the upper plate portion 11. This can reduce a decreasing amount of a magnetic flux S flowing through the magnetic circuit. Since the thickness of the flat steel plate 14 used as a blank does not need to be thick, the needs for downsizing the solenoid valve 1 can be satisfied.

The foregoing embodiments are mere examples and give no limitation to the present invention. The present invention may be embodied in other specific forms without departing from the essential characteristics thereof.

For instance, as an alternative to the aforementioned embodiment in which the drawing process is performed five times, i.e. in five steps, the drawing process may be performed more than or less than five steps.

When the drawing process is to be performed in two or more separate steps, whether or not an external force should be applied may be selected in each of the drawing steps.

In the aforementioned embodiment, the distal end of the protruding portion 12 has the protruding length to protrude into the hollow portion of the coil molded part 20 by a distance equal to or more than one third of the axial length of the hollow portion. However, the protruding portion 12 only needs to protrude into the hollow portion until the distal end of the protruding portion 12 reaches a middle portion of the coil molded part 20.

### Reference Signs List

- 1: Solenoid valve
- 10: Upper core (Magnetic core)
- 11: Upper plate portion
- 12: Protruding portion
- 20: Coil molded part
- 30: Lower core (Magnetic core)
- 33: Side plate portion
- 40: Stuffing
- 50: Flare pipe
- 51: Cylindrical portion
- 52: Diameter-widening portion
- 53: Large-diameter portion
- 59: Compression spring
- 60: Plunger
- 63: Upper wear ring
- 65: Lower wear ring
- 70: Body
- 91: Clip
- 92: Clip body
- 93: Leaf spring

## Claims

1. A solenoid valve (1) including a hollow cylindrical solenoid part (20), a movable core (60), and a valve element (75), in which the movable core (60) is attracted upon energization of the solenoid part (20) to move the valve element (75), wherein the solenoid valve further includes a magnetic core (10, 30) surrounding the solenoid part (20) to form a magnetic circuit, and wherein a part of the magnetic core protrudes into a hollow portion (24A) of the solenoid part (20) to form a hollow cylindrical fixed core (12) provided with a bottom wall portion (12a) at a distal end, **characterized in that**,
the fixed core (12) includes a peripheral wall portion (12b) formed such that a thickness (W3) of the peripheral wall portion (12b) near an open end located far from the bottom wall portion (12a) is thicker than a thickness (W2) of an outside plate portion (11) of the magnetic core (10, 30) and a thickness (W1) of the peripheral wall portion (12b) near the bottom wall portion (12a) is thinner than the thickness (W2) of the outside plate portion (11), and
the thickness (W1) of the peripheral wall portion (12b) near the bottom wall portion (12a) is as thick as 80% or more of the thickness (W2) of the outside plate portion (11) of the magnetic core.

2. The solenoid valve (1) according to claim 1, wherein the fixed core (12) has a protruding length to protrude into the hollow portion (24A) by a distance equal to or longer than one third of a length of the hollow portion (24A) of the solenoid part (20) in an axial direction.

3. The solenoid valve (1) according to claim 1 or 2, wherein
the fixed core (12) is formed of a flat steel plate (14) subjected to a drawing process more than once, and
in the drawing process, a portion of the flat steel plate (14) other than a drawn portion is unclamped down to allow material of the portion other than the drawn portion to flow to the drawn portion.

4. A method for manufacturing a solenoid valve (1) including a hollow cylindrical solenoid part (20), a movable core (60), and a valve element (75), in which the movable core (60) is attracted upon energization of the solenoid part (20) to move the valve element (75), wherein the solenoid valve further includes a magnetic core (10, 30) surrounding the solenoid part to form a magnetic circuit,
**characterized in that**:
the method includes subjecting a flat steel plate (14) to a drawing process more than once so that a part of the magnetic core protrudes into a hollow portion (24A) of the solenoid part (20) to form a hollow cylindrical fixed core (12) provided with a bottom wall portion (12a) at a distal end,
in the drawing process, a portion of the flat steel plate (14) other than a drawn portion is unclamped down to allow material of the unclamped portion to flow to the drawn portion,
the fixed core (12) has a protruding length to protrude into the hollow portion (24A) by a distance equal to or longer than one third of a length of the hollow portion (24A) of the solenoid part (20) in an axial direction,
the fixed core (12) includes a peripheral wall portion (12b) formed such that a thickness (W3) of the peripheral wall portion (12b) near an open end located far from the bottom wall portion (12a) is thicker than a thickness (W2) of an outside plate portion (11) of the magnetic core (10, 30) and a thickness (W1) of the peripheral wall portion (12b) near the bottom wall portion (12a) is thinner than the thickness (W2) of the outside plate portion (11), and
the thickness (W1) of the peripheral wall portion (12b) near the bottom wall portion (12a) is as thick as 80% or more of the thickness (W2) of the outside plate portion of the magnetic core.

## Patentansprüche

1. Ein Magnetventil (1) umfassend ein hohles zylindrisches Magnetteil (20), einen beweglichen Kern (60) und ein Ventilelement (75), in dem der bewegliche Kern (60) bei Bestromung des Magnetteils (20) angezogen wird, um das Ventilelement (75) zu bewegen,
wobei das Magnetventil weiter einen Magnetkern (10, 30) umfasst, der das Magnetteil (20) umgibt, um einen Magnetkreis zu bilden,
und wobei ein Teil des magnetischen Kerns in einen hohlen Abschnitt (24A) des Magnetteils (20) vorsteht, um einen hohlen zylindrischen feststehenden Kern (12) auszubilden, der mit einem Bodenwandabschnitt (12a) an einem distalen Ende versehen ist,
**dadurch gekennzeichnet, dass**
der feststehende Kern (12) einen Umfangswandabschnitt (12b) umfasst, der derart ausgebildet ist, dass eine Dicke (W3) des Umfangswandabschnitts (12b) nahe einem offenen Ende, das sich entfernt vom Bodenwandabschnitt (12a) befindet, dicker als eine Dicke (W2) eines äußeren Plattenabschnitts (11) des Magnetkerns (10, 30) ist und eine Dicke (W1) des Umfangswandabschnitts (12b) nahe des Bodenwandabschnitts (12a) dünner als die Dicke (W2) des äußeren Plattenabschnitts (11) ist, und
die Dicke (W1) des Umfangswandabschnitts (12b) nahe des Bodenwandabschnitts (12a) 80% oder mehr der Dicke (W2) des äußeren Plattenabschnitts (11) des Magnetkerns beträgt.

2. Das Magnetventil (1) nach Anspruch 1, wobei der feststehende Kern (12) eine vorstehende Länge aufweist, um in den hohlen Abschnitt (24A) um einem Abstand gleich einem oder länger als ein Drittel einer Länge des hohlen Abschnitts (24A) des Magnetteils (20) in einer axialen Richtung vorzustehen.

3. Das Magnetventil (1) nach Anspruch 1 oder 2, wobei
der feststehende Kern (12) aus einer flachen Stahlplatte (14) gebildet wird, die mehr als einmal einem Ziehvorgang unterzogen wird, und
in dem Ziehvorgang ein anderer Abschnitt der flachen Stahlplatte (14) als ein Ziehabschnitt nicht eingespannt ist, um dem Material des anderen Abschnitts als der Ziehabschnitt zu ermöglichen, zum Ziehabschnitt zu fließen.

4. Ein Verfahren zur Herstellung eines Magnetventils (1), das ein hohles zylindrisches Magnetteil (20) einen beweglichen Kern (60) und ein Ventilelement (75) umfasst, in dem der bewegliche Kern (60) bei Bestromung des Magnetteils (20) angezogen wird, um das Ventilelement (75) zu bewegen,
wobei das Magnetventil weiter einen Magnetkern (10, 30) umfasst, der das Magnetteil (20) umgibt, um einen Magnetkreis zu bilden,
**dadurch gekennzeichnet, dass**:
das Verfahren umfasst, ein flache Stahlplatte (14) mehr als einmal einem Ziehvorgang zu unterziehen, so dass ein Teil des Magnetkerns in einen hohlen Abschnitt (24A) des Magnetteils (20) vorsteht, um einen hohlen zylindrischen feststehenden Kern (12), der mit einem Bodenwandabschnitt (12a) an einem distalen Ende versehen ist, auszubilden,
in dem Ziehvorgang ein anderer Abschnitt der flachen Stahlplatte (14) als ein Ziehabschnitt nicht eingespannt ist, um dem nicht eingespannten Abschnitt zu ermöglichen, zum Ziehabschnitt zu fließen,
der feststehende Kern (12) eine vorstehende Länge aufweist, um in den hohlen Abschnitt (24A) um einem Abstand gleich einem oder länger als ein Drittel einer Länge des hohlen Abschnitts (24A) des Magnetteils (20) in einer axialen Richtung vorzustehen,
der feststehende Kern (12) einen Umfangswandabschnitt (12b) umfasst, der derart ausgebildet ist, dass eine Dicke (W3) des Umfangswandabschnitts (12b) nahe einem offenen Ende, das sich entfernt vom Bodenwandabschnitt (12a) befindet, dicker als eine Dicke (W2) eines äußeren Plattenabschnitts (11) des Magnetkerns (10, 30) ist und eine Dicke (W1) des Umfangswandabschnitts (12b) nahe des Bodenwandabschnitts (12a) dünner als die Dicke (W2) des äußeren Plattenabschnitts (11) ist, und
die Dicke (W1) des Umfangswandabschnitts (12b) nahe des Bodenwandabschnitts (12a) 80% oder mehr der Dicke (W2) des äußeren Plattenabschnitts (11) des Magnetkerns beträgt.

## Revendications

1. Electrovanne (1) comportant une partie de solénoïde cylindrique creux (20), un noyau mobile (60), et un élément de vanne (75), dans laquelle le noyau mobile (60) est attiré lors d'une mise sous tension de la partie de solénoïde (20) pour déplacer l'élément de vanne (75),
dans laquelle l'électrovanne comporte en outre un noyau magnétique (10, 30) entourant la partie de solénoïde (20) pour former un circuit magnétique,
et dans laquelle une partie du noyau magnétique fait saillie dans une portion creuse (24A) de la partie de solénoïde (20) pour former un noyau fixe cylindrique creux (12) pourvu d'une portion de paroi de dessous (12a) à une extrémité distale,
**caractérisée en ce que**,
le noyau fixe (12) comporte une portion de paroi périphérique (12b) formée de sorte qu'une épaisseur (W3) de la portion de paroi périphérique (12b) près d'une extrémité ouverte située loin de la portion de paroi de dessous (12a) soit plus épaisse qu'une épaisseur (W2) d'une portion de plaque extérieure (11) du noyau magnétique (10, 30) et qu'une épaisseur (W1) de la portion de paroi périphérique (12b) près de la portion de paroi de dessous (12a) soit plus mince que l'épaisseur (W2) de la portion de plaque extérieure (11), et
l'épaisseur (W1) de la portion de paroi périphérique (12b) près de la portion de paroi de dessous (12a) représente 80 % ou plus de l'épaisseur (W2) de la portion de plaque extérieure (11) du noyau magnétique.

2. Electrovanne (1) selon la revendication 1, dans laquelle le noyau fixe (12) a une longueur de saillie pour faire saillie dans la portion creuse (24A) d'une distance supérieure ou égale à un tiers d'une longueur de la portion creuse (24A) de la partie de solénoïde (20) dans une direction axiale.

3. Electrovanne (1) selon la revendication 1 ou 2, dans laquelle
le noyau fixe (12) est formé d'une plaque en acier plate (14) soumise à un processus d'étirage plus d'une fois, et
dans le processus d'étirage, une portion de la plaque en acier plate (14) autre qu'une portion étirée est desserrée pour permettre à une matière de la portion autre que la portion étirée de s'écouler vers la portion étirée.

4. Procédé de fabrication d'une électrovanne (1) comportant une partie de solénoïde cylindrique creux (20), un noyau mobile (60), et un élément de vanne (75), dans laquelle le noyau mobile (60) est attiré lors d'une mise sous tension de la partie de solénoïde (20) pour déplacer l'élément de vanne (75),
dans lequel l'électrovanne comporte en outre un noyau magnétique (10, 30) entourant la partie de solénoïde pour former un circuit magnétique,
**caractérisé en ce que** :
le procédé comporte la soumission d'une plaque en acier plate (14) à un processus d'étirage plus d'une fois de sorte qu'une partie du noyau magnétique fasse saillie dans une portion creuse (24A) de la partie de solénoïde (20) pour former un noyau fixe cylindrique creux (12) pourvu d'une portion de paroi de dessous (12a) à une extrémité distale,
dans le processus d'étirage, une portion de la plaque en acier plate (14) autre qu'une portion étirée est desserrée pour permettre à une matière de la portion desserrée de s'écouler vers la portion étirée,
le noyau fixe (12) a une longueur de saillie pour faire saillie dans la portion creuse (24A) d'une distance supérieure ou égale à un tiers d'une longueur de la portion creuse (24A) de la partie de solénoïde (20) dans une direction axiale,
le noyau fixe (12) comporte une portion de paroi périphérique (12b) formée de sorte qu'une épaisseur (W3) de la portion de paroi périphérique (12b) près d'une extrémité ouverte située loin de la portion de paroi de dessous (12a) soit plus épaisse qu'une épaisseur (W2) d'une portion de plaque extérieure (11) du noyau magnétique (10, 30) et qu'une épaisseur (W1) de la portion de paroi périphérique (12b) près de la portion de paroi de dessous (12a) soit plus mince que l'épaisseur (W2) de la portion de plaque extérieure (11), et
l'épaisseur (W1) de la portion de paroi périphérique (12b) près de la portion de paroi de dessous (12a) représente 80 % ou plus de l'épaisseur (W2) de la portion de plaque extérieure du noyau magnétique.
